# EUROPÄISCHE PATENTSCHRIFT

(11) **EP 0 618 245 B1**
(45) Veröffentlichungstag und Bekanntmachung des Hinweises auf die Patenterteilung: **12.07.2000**
(21) Anmeldenummer: 94104491.9
(22) Anmeldetag: 22.03.1994
(51) Int. Cl.: C08G 59/04, C08J 3/03, C08L 63/00, C08L 71/02

(54) **Polyol-Epoxid Additionsprodukte zur Verwendung als Emulgator für flüssige Epoxidharze**
Polyol/epoxy adduct for use as an emulsifier for liquid epoxy resins
Produit d'addition de polyol/epoxyde pour l'utilisation comme agent émulsifiant pour des résines époxydes liquides

(30) Priorität: 29.03.1993 DE 4310198
(43) Veröffentlichungstag der Anmeldung: 05.10.1994
(73) Patentinhaber: HOECHST AKTIENGESELLSCHAFT, 65926 Frankfurt am Main (DE)
(72) Erfinder: Pfeil, Armin, Dr., 86916 Kaufering (DE); Geisler, Jörg-Peter, Dr., D-55218 Ingelheim (DE); Godau, Claus, D-65399 Kiedrich (DE); Stengel-Rutkowski, Bernhard, D-65207 Wiesbaden (DE); Meyer, Matthias, Dr., D-22391 Hamburg (DE); Petri, Stefan, D-65232 Taunusstein (DE)
(74) Vertreter: Zounek, Nikolai, Dipl.-Ing.

(56) Entgegenhaltungen:
- EP-A- 0 000 605
- EP-A- 0 272 595
- EP-A- 0 493 916
- GB-A- 2 115 424
- US-A- 3 352 804

## Beschreibung

Wasserverdünnbare Epoxidharzsysteme haben unter den kalthärtenden Wasserlacken zunehmend an Bedeutung gewonnen. Diese Zwei-Komponenten-Systeme weisen hervorragende Eigenschaften auf im Vergleich zu Ein-Komponenten-Wasserlacken. Hervorzuheben sind folgende positive Eigenschaften: Kein oder nur geringer Lösemittelanteil, nicht feuergefährlich, keine oder nur geringe Geruchsbelästigung, leichte Verarbeitbarkeit, geringe Empfindlichkeit gegenüber feuchten Untergründen, gute Trocknung und schnelle Durchhärtung, exzellente Haftung auf den meisten Substraten, sehr gute Zwischenschichthaftung, guter Korrosionsschutz bei Metallen und leichte Reinigung der Arbeitsgeräte direkt nach Gebrauch.

Im allgemeinen eignen sich als Bindemittel für wasserverdünnbare Epoxidsysteme flüssige, evtl. emulgatorhaltige Epoxidharze, reaktivverdünnte Harze und Festharzdispersionen. Im Falle von Flüssigharzen werden oft Gemische von Epoxidharzen auf Basis von Bisphenol A und F (sog. A/F-Harze) verwendet, um die Kristallisationsanfälligkeit zu senken. Soll das Flüssigharz selbstemulgierend sein, so ist die Verwendung eines nichtionischen Emulgators (Hydrophilic Lipophilic Balance HLB > 16) nötig, um das stark hydrophobe Epoxidharz (HLB <1) in die wäßrige kontinuierliche Phase zu überführen. Zum Teil kann diese Wirkung auch durch wasserverdünnbare Härter, welche selber emulgierende Eigenschaften haben, erbracht werden. Nichtmodifizierte A/F-Harz-Gemische sind nicht selbstemulgierend und nur in der Kombination mit wäßrigen Härtern, wie sie in z.B. EP 0 000 605 beschrieben sind, wasserverdünnbar; solche Systeme ergeben einen sehr guten Korrosionsschutz.

Fremdemulgierte Systeme sind als Stand der Technik hinreichend bekannt (DE 27 26 269, EP 491 550, DE 41 37 590). So werden z.B. reaktivverdünnte A/F-Flüssigharze in Kombination mit nichtionischen Emulgatoren eingesetzt. Diese fremdemulgierenden Harze zeigen zwar in der Summe gute Eigenschaften, doch ist der Korrosionschutz der entsprechenden Beschichtungen durch den Gehalt an hydrophilen Emulgatoren gegenüber zuvör genannten Systemen schlechter.

Ziel der vorliegenden Erfindung war es daher, einen Emulgator zur Formulierung wasserverdünnbarer Epoxidflüssigharze zu entwickeln, welcher zu einem selbstemulgierenden, wasserfreien Flüssigharz mit verbessertem Korrosionsschutz und insgesamt verbessertem Eigenschaftsbild führt.

Für Epoxidharze sind spezielle Emulgatoren bekannt, welche durch Kondensation von Diglycidylverbindungen mit Polyoxyalkylendiolen erhalten werden. Diese Systeme haben sich z.B. bei der Herstellung wäßriger Epoxid-Festharzdispersionen bewährt. So beschreibt das Patent US 4,122,067 ein Emulgatorsystem, das durch Kondensation von Diglycidylethern mit Polyethylenglykolen im Molverhältnis OH-Gruppe : Epoxidgruppe = 1:0,5 bis 1:0,833 erhalten wird. Somit werden hier ausschließlich OH-funktionelle Emulgatoren erfaßt. EP 0 272 595 zeigt ein vergleichbares Emulgatorsystem (OH:EP = 1:0,85 bis 1:3,5), wobei die Verwendung spezieller Katalysatoren bei der Kondensationsreaktion ebenfalls eine wesentliche Rolle spielt. Hier werden sowohl OH-funktionelle als auch EP-funktionelle Systeme beschrieben.

EP 0 000 605 beschreibt analoge Systeme, welche ein Verhältnis von OH:EP zwischen 1:1,333 und 1:4 aufweisen, hier aber zur Hydrophilisierung von modifizierten Polyaminen eingesetzt werden, um wasserverdünnbare Epoxid-Härter zu gewinnen.

In der EP-A 0 493 916 wird ein Verfahren zur Herstellung von höhermolekularen Epoxid-Derivaten beschrieben, worin Diepoxide mit Dihydroxyverbindungen umgesetzt werden. Über die Eignung des Reaktionsprodukts als Emulgator ist nichts ausgesagt.

Überraschenderweise wurde nun gefunden, daß sich entsprechende Verbindungen mit erhöhtem Epoxidgehalt, also mit höherer Epoxidfunktionalität, hervorragend für den Einsatz als nichtionischer Emulgator in wasserverdünnbaren Epoxid-Flüssigharzsystemen eignen.

Gegenstand der vorliegenden Erfindung ist die Verwendung von Polyol-Epoxid Additionsprodukten erhältlich durch Umsetzung von
(A) einem aliphatischen Polyol mit einer gewichtsmittleren Molmasse (Mw) von 200 bis 20000 g/mol
   und
(B) einer Epoxidverbindung mit mindestens zwei Epoxidgruppen pro Molekül und einem Epoxidäquivalentgewicht von 100 bis 2000 g/mol, -
wobei das Äquivalentverhältnis der OH-Gruppen zu den EP-Gruppen 1:3,6 bis 1:10, vorzugsweise 1:4 bis 1:9, besonders bevorzugt 1:4,5 bis 1:8 beträgt und das Epoxidäquivalentgewicht des Additionsprodukts zwischen 150 g/mol und 8000 g/mol, bevorzugt zwischen 250 g/mol und 1000 g/mol liegt, als Emulgatoren für flüssige Epoxidharze.

Bei den aliphatischen Polyolen (A) handelt es sich vorzugsweise um Polyetherpolyole (Polyalkylenglykole) mit gewichtsmittleren Molmassen (Mw; Gelpermeationschromatographie; Polystyrolstandard) von bevorzugt zwischen 200 und 20000, insbesondere 1000 bis 6000 g/mol und OH-Zahlen zweckmäßigerweise von 10 bis 600, bevorzugt 15 bis 120 mg KOH / g. Diese Polyetherpolyole besitzen vorzugsweise nur endständige, primäre OH-Gruppen. Beispielsweise seien hier Blockcopolymere aus Ethylenoxid und Propylenoxid sowie Polyethylen-, Polypropylen-, Polybutylenglykole genannt, wobei auch Gemische der jeweiligen Polyalkylenglykole eingesetzt werden können. Vorzugsweise werden Polyethylenglykole verwendet.

Die Epoxidverbindungen entsprechend (B) besitzen vorzugsweise ein Epoxidäquivalentgewicht von 100 bis 2000, insbesondere von 150 bis 1000 g/mol. Es handelt sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Ethergruppierungen und ähnliche.

Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 100 und 2000, insbesondere zwischen 100 und 350 g/mol.

Als mehrwertige Phenole sind beispielsweise zu nennen: Resorcin, Hydrochinon, 2,2-Bis-(4'-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan,4,4'-Dihydroxy-3,3'-dimethyldiphenylpropan,4,4'-Dihydroxydiphenyl,4,4'-Dihydroxybenzophenon, 1,1-Bis-(4'-hydroxyphenyl)-ethan, 2,2-Bis-[4'-(2''-Hydroxypropoxy)phenyl]-propan, 1,1-Bis-(4'-hydroryphenyl)-isobutan, 2,2-Bis-(4'-hydroxy-3'-tert.-butylphenyl)-propan,Bis-(2-hydroxynaphthyl)-methan, 1,5-Dihydroxynaphthalin, Tris-(4-hydroxyphenyl)-methan, Bis-(4-hydroxyphenyl)ether, Bis-(4-hydroxyphenyl)sulfon u. a. sowie die Halogenierungs- und Hydrierungsprodukte der vorstehend genannten Verbindungen. Bisphenol A ist hierbei besonders bevorzugt.

Beispiele für mehrwertige Alkohole als Basis für die entsprechenden Polyglycidylether sind Ethylenglykol, Diethylenglykol, Triethylenglykol, Polyethylenglykole (n = 1 bis 35), 1,2-Propylenglykol, Polypropylenglykole (n = 1 bis 15), 1,3-Propylenglykol, 1,4-Butandiol, 1,5-Pentandiol, 1,6-Hexandiol, 1,2,6-Hexantriol, Glycerin, Neopentylglykol, Trimethylolethan und Trimethylolpropan genannt. Polypropylenglykole (n = 8 - 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A.M.Paquin, Springer Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Vorzugsweise wird der Emulgator durch Kondensation der genannten Polyetherpolyole (A) mit den Epoxidverbindungen (B) in Gegenwart geeigneter Katalysatoren bei 50 bis 200 °C, vorzugsweise bei 90 bis 170 °C, hergestellt, wobei das Äquivalentverhältnis der OH-Gruppen zu den Epoxidgruppen 1:3,6 bis 1:10, vorzugsweise 1:4 bis 1:9, besonders bevorzugt 1:4,5 bis 1:8 und das Epoxidäquivalentgewicht des Kondensationsproduktes 150 g/mol bis 8000 g/mol, bevorzugt 250 g/mol bis 1000 g/mol beträgt.

Als Katalysatoren für die Darstellung des Dispergiermittels eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumethylat und Kaliumdodecylat sowie die Alkalisalze von Carbonsäuren, wie zum Beispiel Natrium- und Lithiumstearat. Ebenfalls geeignet sind starke anorganische und organische Protonsäuren, zum Beispiel Phosphorsäure, Tetrafluorborsäure und Benzolsulfonsäure. Ferner können als Katalysatoren Lewis-Säuren verwendet werden. Als Beispiele seien Zinn(IV)chlorid, Titan(IV)chlorid, Titan(IV)isopropylat, Triethyloxoniumtetrafluoroborat sowie Bortrifluorid und seine Komplexe, zum Beispiel mit Phosphorsäure, Essigsäure (1:1 und 1:2), Methanol, Diethylether, Tetrahydrofuran, Phenol, Ethylenglykolmonoethylether, Polyethylenglykol (MG200), Dimethylsulfoxid, Di-n-Butylether, Di-n-Hexylether, Bernsteinsäure und aliphatische, cycloaliphatische, araliphatische Amine sowie Stickstoff-Heterocyclen genannt.

Bevorzugt werden als Katalysatoren BF₃-Diethylether, BF₃-Aminkomplexe und wäßrige Tetrafluorborsäure eingesetzt. Die Menge an Katalysator beträgt im allgemeinen 0,1 bis 5, vorzugsweise 0,1 bis 1 Gew.-%, bezogen auf das Reaktionsgemisch. Zur besseren Dosierung kann der Katalysator in einem Lösungsmittel wie Diethylether, einem Glykol- oder cyclischen Ether, Ketonen und dergleichen verdünnt werden.

Zur Herstellung des Emulgators erwärmt man die umzusetzenden Gemische aus Hydroxylgruppen und Epoxidgruppen enthaltenden Verbindungen bis zu der Temperatur, bei der die Kondensation mit ausreichender Geschwindigkeit d.h. in 30 min bis 5 Stunden, abläuft. Die Umsetzung verfolgt man zweckmäßig über die Zunahme des Epoxidäquivalents, das eine Verminderung des Epoxidgruppengehaltes anzeigt. Die Reaktion kann durch Kühlung unter die Reaktionstemperatur abgebrochen werden.

Durch Abmischen der so erhaltenen Emulgatoren mit Epoxid-Flüssigharzen erhält man selbstemulgierende Flüssigharz-Systeme, welche mit den üblichen, vorzugsweise wasserverdünnbaren bzw. wasseremulgierbaren Aminhärtern zu Filmen mit guten Eigenschaften vernetzen. Dieses Abmischen geschieht zweckmäßigerweise bei erhöhter Temperatur, ggf. unter Vakuum, um Schaumbildung zu verhindern.

Als Epoxid-Flüssigharzkomponente haben sich insbesondere Harte auf der Basis von Bisphenol A- und Bisphenol-F-Diglycidylethern (BADGE und BFDGE) bewährt. Die anteilsmäßige Verwendung von BFDGE erhöht die Chemikalienbeständigkeit und senkt die Kristallisationsneigung, wirkt sich allerdings nachteilig auf Kreidungsverhalten und Vergilbungsneigung aus. Der Zusatz von bis zu 20 % an Reaktiwerdünnern kann sinnvoll sein, um Viskosität und Gebrauchsdauer günstig zu beeinflussen.

Beispiele für Härtungsmittel, vorzugsweise für die Härtung bei Raumtemperatur und/oder niedrigeren Temperaturen (Aminkalthärter), die allgemein im Äquivalentverhältnis Epoxidäquivalent zu Aminwasserstoffäquivalent von 1 : 0,75 bis 1 : 2,0 eingesetztwerden, sind Polyalkylenamine, wie Diethylentriamin, Triethylentetramin, Tetraethylenpentamin, Pentaethylenhexamin u.a., ferner 2,2,4- und/oder 2,4,4-Trimethylhexamethylendiamin, Bis-(3-aminopropyl)-amin, 1,4-Bis-(3'-aminopropyl)-piperazin, N,N-Bis(3-aminopropyl)-ethylendiamin, Neopentandiamin, 2-Methyl-1,5-pentandiamin, 1,3-Diaminopentan, Hexamethylendiamin u.a., sowie cycloaliphatische Amine wie 1,2- bzw. 1,3-Diaminocyclohexan, 1,4-Diamino-3,6-diethylcyclohexan, 1,2-Diamino-4-ethylcyclohexan, 1,4-Diamino-3,6-diethylcyclohexan, 1-Cyclohexyl-3,4-diaminocyclohexan, Isophorondiamin und Umsetzungsprodukte davon, 4,4'-Diaminodicyclohexyl-methan und -propan, Bis(4-aminocyclohexyl)-methan und -propan, 3,3'-Dimethyl-4,4'-diaminodicyclohexylmethan, 3-Amino-1-cyclohexyl-aminopropan, 1,3- und 1,4-Bis-(aminomethyl)-cyclohexan. Als araliphatische Amine werden insbesondere solche eingesetzt, bei denen aliphatische Aminogruppen vorhanden sind, z.B. meta- und para-Xylylendiamin oder deren Hydrierungsprodukte. Die genannten Amine können allein oder als Gemische verwendet werden.

Bevorzugt werden als Aminhärter neben den zuvor genannten Polyaminen wasserlösliche Polyoxyalkylendi- und -polyamine mit Molgewichten von 100 bis 2000, z.B. die von der Firma Texaco unter dem Warenzeichen Jeffamine vertriebenen Produkte, sowie die leicht in Wasser dispergierbaren Härtungsmittel, wie sie in der DE-Auslegeschrift 23 32 177 und der EP-Patentschrift 0 000 605 beschrieben sind, also z.B. modifizierte Amin-Addukte, eingesetzt.

Als Härter können auch Mannich-Basen, Epoxid-Amin Addukte oder Polyamidoamine eingesetzt werden.

Geeignete Mannich-Basen werden durch Kondensation von Polyaminen, vorzugsweise Diethylentriamin, Triethylentetramin, Isophorondiamin, 2,2,4- bzw. 2,4,4-Trimethylhexamethylendiamin, 1,3- und 1,4-Bis-(aminomethyl)-cyclohexan, insbesondere meta- und para-Xylylendiamin mit Aldehyden, vorzugsweise Formaldehyd und ein- oder mehrwertigen Phenolen mit mindestens einer gegenüber Aldehyden reaktiven Kernposition, beispielsweise den verschiedenen Kresolen und Xylenolen, para-tert.-Burylphenol, Resorcin, 4,4'-Dihydroxydiphenylmethan, 2,2-Bis-(4'-hydroxyphenyl-)propan, vorzugsweise aber Phenol hergestellt.

Als Amin-Epoxid-Addukte kommen beispielsweise Umsetzungsprodukte von Polyaminen, wie z.B. Ethylendiamin, Propylendiamin, Hexamethylendiamin, 2,2,4-und 2,4,4-Trimethylhexamethylendiamin, meta-Xylylendiamin und/oder Bis(aminomethyl)-cyclohexan mit endständigen Mono- oder Polyepoxiden, wie z.B. Propylenoxid, Hexenoxid, Cyclohexenoxid, oder mit Glycidylethern wie Phenylglycidylether, tert.-Butylglycidylether, Ethylhexylglycidylether, Butylglycidylether oder mit Glycidylestern, wie dem von der Firma Shell vertriebenen Glycidylester der Versaticsäure (Cardura® E) oder den unter (B) genannten Polyglycidylethern und -estern in Betracht.

Polyamidoamine, die zur Härtung der erfindungsgemäßen Epoxidharzdispersionen verwendet werden können, werden beispielsweise durch Umsetzung von Polyaminen mit Mono- oder Polycarbonsäuren, z.B. dimerisierten Fettsäuren, erhalten.

Zur Erzielung einer schnelleren und/oder vollständigeren Durchhärtung können die aus den erfindungsgemäßen Epoxidharzdispersionen mit den genannten Aminhärtern erhältlichen Beschichtungen auch 15 bis 120 Minuten auf 50 bis 120 °C erhitzt werden.

Die erfindungsgemäßen selbstemulgierbaren Flüssigharzsysteme finden Anwendung vor allem als Schutzanstrich für mineralische Untergründe, d.h. auf Putz, Beton, Mauerwerk, Zement. Beschichtet werden beispielsweise Wände, Decken und Böden in Garagen, Großküchen, Krankenhäusern, Molkereien, Badeanstalten, Tunnelanlagen und Kernkraftwerken. Bei entsprechender Formulierung können die erfindungsgemäßen Systeme auch als Korrosionsschutzprimer auf Stahluntergründen verwendet werden. Auch der Einsatz als hochglänzende Klarlacke für die verschiedensten Substrate, wie z.B. Holz, ist möglich.

Gegebenenfalls können die üblichen, dem Fachmann bekannten Pigmente und Füllstoffe zugegeben werden, wobei diese Zugabe wahlweise zur Flüssigharzkomponente und/oder zur Härterkomponente erfolgen kann.

Die folgenden Beispiele sollen die Erfindung repräsentieren, ohne durch ihre Auswahl einschränkend zu wirken:

### BEISPIELE:

Es werden folgende Abkürzungen verwendet:
- BADGE: Diglycidylether von Bisphenol A
- BFDGE: Diglycidylether von Bisphenol F
- PEG nnnn: Polyethylenglykol der mittleren Molmasse nnnn g/mol
- EV-Wert: Epoxidäquivalentgewicht

### I. Emulgatoren

I.1 BADGE + PEG 2000
   (OH : EP = 1 : 6,6)
   389 g eines 100%igen Diglycidylethers von Bisphenol A mit einem EV-Wert von 185 g/mol (BADGE, Beckopox® EP 140 der Firma Hoechst) werden mit 311 g Polyethylenglykol (PEG) der mittleren Molmasse 2000 g/mol in einer Stickstoffatmosphäre auf 125 °C geheizt. Unter gutem Rühren gibt man 1,5 g eines BF₃-Aminkomplexes als Katalysator zu (Anchor 1040 der Firma Anchor). Während vier Stunden erhöht man die Temperatur kontinuierlich auf 150 °C. Der EV-Wert beträgt nun 415-420 g/mol. Der Ansatz erstarrt bei Raumtemperatur zu einer wachsartig-kristallinen Masse.
I.2 BADGE/BFDGE + PEG 1000
   (OH : EP = 1 : 4,4)
   480 g eines Gemisches aus 35 % BFDGE und 65 % BADGE mit einem mittleren EV-Wert von etwa 180 g/mol werden mit 300 g PEG der mittleren Molmasse 1000 g/mol in einer Stickstoffatmosphäre auf 125 °C geheizt. Unter gutem Rühren gibt man 1,4 g Anchor 1040 zu. Man erhöht die Temperatur kontinuierlich auf 160 °C (5K / 30 min); ein EV-Wert von 360 g/mol wird nach 3,5 Stunden erreicht. Durch Nachgabe von insgesamt 0,35 g Anchor 1040 in zwei Portionen bei dieser Temperatur wird nach weiteren drei Stunden der EV-Wert von 400 g/mol erhalten. Der Ansatz erstarrt bei Raumtemperatur zu einer wachsartig-kristallinen Masse.
I.3 BFDGE + PEG 1000
   (OH : EP = 1 : 4,7)
   480 g BFDGE (Beckopox® SEP 106; EV-Wert 170 g/mol) werden mit 300 g PEG 1000 in einer Stickstoffatmosphäre auf 125 °C geheizt. Unter gutem Rühren gibt man 1,7 g Anchor 1040 zu. Man erhöht die Temperatur kontinuierlich auf 160 °C (5K / 30 min); ein EV-Wert von 350 g/mol wird nach vier Stunden erreicht. Der Ansatz erstarrt bei Raumtemperatur zu einer wachsartig-kristallinen Masse.
I.4 BADGE + PEG 1000
   (OH : EP = 1 : 4,4)
   496 g BADGE (Beckopox® EP 140; EV-Wert 185 g/mol) werden mit 310 g PEG 1000 in einer Stickstoffatmosphäre auf 125 °C geheizt. Unter gutem Rühren gibt man 2,0 g Anchor 1040 zu. Man erhöht die Temperatur kontinuierlich auf 160 °C (5K / 30 min); ein EV-Wert von 420 g/mol wird nach zwei Stunden erreicht. Der Ansatz verdickt bei Raumtemperatur zu einer hellen Flüssigkeit mit der Viskosität 25 Pas (25 °C).
   I.A BADGE + PEG 1000
      (OH : EP = 1 : 1,2)
      Vergleichsbeispiel gemäß EP 0 272 595
      110 g BADGE (Beckopox® EP 140; EV-Wert 185 g/mol) werden mit 1000 g PEG 4000 in einer Stickstoffatmosphäre auf 80 °C geheizt. Unter gutem Rühren gibt man 2,0 g HBF₄ zu. Man erhöht die Temperatur kontinuierlich auf 120 °C (5K / 30 min) und hält bei dieser Temperatur, bis der EV-Wert über 20000 g/mol liegt. Der Ansatz erstarrt bei Raumtemperatur zu einer hellen, wachsartigen Masse.
   I.B BADGE + PEG 2000
      (OH : EP = 1 : 2,3)
      Vergleichsbeispiel gemäß EP 0 272 595
      154 g BADGE mit einem Epoxid-Äquivalentgewicht (EV-Wert) von 185 g/mol (Beckopox® EP 140) werden mit 346 g PEG der mittleren Molmasse 2000 g/mol in einer Stickstoffatmosphäre auf 125 °C geheizt. Unter gutem Rühren gibt man 1,1 g eines BF₃-Aminkomplexes als Katalysator zu (Anchor 1040 der Firma Anchor). Man erhöht die Temperatur kontinuierlich auf 160 °C; ein EV-Wert von 600 g/mol wird nach 5,5 Stunden erreicht. Durch Nachgabe von insgesamt 2,0 g Anchor 1040 in vier Portionen bei dieser Temperatur wird nach weiteren 10 Stunden der EV-Wert von 1000 g/mol erhalten. Der dunkle Ansatz erstarrt bei Raumtemperatur zu einer wachsartig-kristallinen Masse.

### II. Flüssigharzgemische

II.1 Emulgator I.1 und BFDGE/BADGE-Harz
   175 g Diglycidylether von Bisphenol F mit einem EV-Wert von 165 - 175 (BFDGE, Beckopox® SEP 106) und 325 g BADGE (Beckopox® EP 140) werden bei Raumtemperatur homogenisiert. Zu der homogenen Mischung gibt man 68,2 g des gemäß Beispiel I.1 erhaltenen Emulgators (12% bezogen auf die Gesamtmasse). Man homogenisiert bei 70 °C während zwei Stunden unter Stickstoff. Das so erhaltene selbstemulgierbare Flüssigharzgemisch weist einen EV-Wert von 190 - 200 g/mol auf und eine Viskosität von 4800 mPas (25 °C).
II.2 Emulgator I.2 und BFDGE/BADGE-Harz
   Man verfährt wie in Beispiel II.1. Das so erhaltene selbstemulgierbare Flüssigharzgemisch weist einen EV-Wert von 190 - 200 g/mol auf und eine Viskosität von 7800 mPas (25 °C).
II.3 Emulgator I.3 und BFDGE/BADGE-Harz
   Man verfährt wie in Beispiel II.1. Das so erhaltene selbstemulgierbare Flüssigharzgemisch weist einen EV-Wert von 190 - 200 g/mol auf und eine Viskosität von 6900 mPas (25 °C).
II.4 Emulgator I.4 und BFDGE/BADGE-Harz
   Man verfährt wie in Beispiel II.1. Das so erhaltene selbstemulgierbare Flüssigharzgemisch weist einen EV-Wert von 195 g/mol auf und eine Viskosität von 12700 mPas (25 °C).
II.5 Emulgator I.4 und BADGE-Harz
   Man verfährt wie in Beispiel II.1. Das so erhaltene selbstemulgierbare Flüssigharzgemisch weist einen EV-Wert von 200 g/mol auf und eine Viskosität von 10000 mPas (25 °C).
   II.A Emulgator I.A und BFDGE/BADGE-Harz
      (Emulgator aus EP 0 272 595)
      Man verfährt wie in Beispiel II.1. Das so erhaltene selbstemulgierbare Flüssigharzgemisch weist einen EV-Wert von 210 g/mol auf und eine Viskosität von 20000 mPas (25 °C).
   II.B Emulgator I.B und BFDGE/BADGE-Harz
      Man verfährt wie in Beispiel II.1. Das so erhaltene selbstemulgierbare Flüssigharzgemisch weist einen EV-Wert von 190 - 200 g/mol auf und eine Viskosität von 7000 mPas (25 °C).
   II.C Gemisch handelsüblicher Emulgatoren und BFDGE/BADGE-Harz Beispiel 22 aus EP 0 000 605
      30 g Diglycidylether von Bisphenol F mit einem EV-Wert von 165 - 175 (BFDGE, Beckopox® SEP 106) und 45,1 g BADGE (Beckopox® EP 140) werden bei Raumtemperatur homogenisiert. Das Gemisch mit einem EV-Wert von ca. 180 g/mol und einer Viskosität von ca. 6500 mPas wurde in der Wärme mit 4,8 g eines Emulgatorgemisches, bestehend aus 2,14 g eines Anlagerungsproduktes von 25-30 mol Ethylenoxid an 1 mol Abietinsäure, 0,8 g eines Anlagerungsproduktes von 4 mol Ethylenoxid an 1 mol p-Nonylphenol, 0,8 g eines Anlagerungsproduktes von 10 mol Ethylenoxid an 1 mol p-Nonylphenol und 1,06 g n-Dodecylalkohol vermischt. Der EV-Wert beträgt etwa 185 g/mol.

### III. Anwendungstechnische Ausprüfung

III.1 Verwendeter Härter, Formulierung
   Es handelt sich beim Härter um ein wasserverdünnbares Addukt aus Isophorondiamin, meta-Xylylendiamin und einer modifizierten Diglycidylverbindung, welches als 80%ige Lösung in Wasser vorliegt. Die Viskosität beträgt etwa 20000 mPas, das berechnete Aminwasserstoff-Äquivalentgewicht liegt bei 115 g/mol (Beckopox VEH 2133 w). Der Härter wird vor Gebrauch auf 40 % mit Wasser eingestellt.

Bei der Formulierung des Zwei-Komponenten-Systems wird eine leichte Übervernetzung (1,25 val je Epoxidgruppe) gewählt und die Gesamtmischung mit Wasser auf Prüfviskosität gebracht.

Die erfindungsgemäßen Flüssigharze weisen eine etwas verkürzte Gebrauchsdauer auf, mit dem Vorteil der wesentlich verkürzten Trocknungszeit (staubtrocken) und erhöhten Anfangshärte. Wesentlichster Pluspunkt ist die gute Wasserfestigkeit, die nicht mit allen Vergleichsbeispielen erreicht werden kann. Durchweg guter Verlauf und Film in Kombination mit z.T. deutlich erhöhter Härte runden das gute Eigenschaftsbild ab. Durch die Abwesenheit von Reaktivverdünnern verhalten sich die erfindungsgemäßen Produkte unter gewerbehygienischen Gesichtspunkten weit weniger problematisch.

Die Ergebnisse der Ausprüfung sind in der folgenden Tabelle zusammengefaßt:

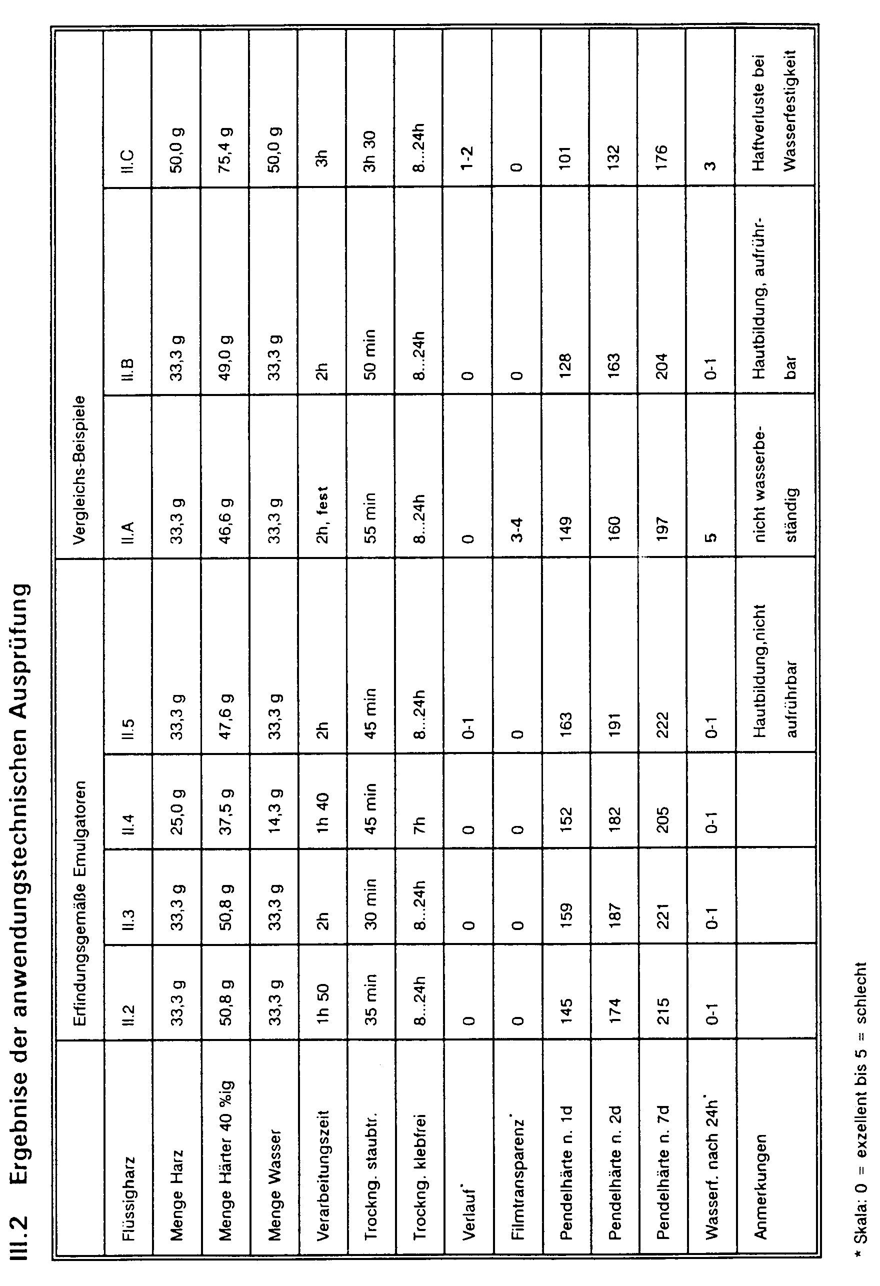

## Patentansprüche

1. Verwendung von Polyol-Epoxid-Additionsprodukten erhältlich durch Umsetzung
(A) eines aliphatischen Polyols mit einer gewichtsmittleren Molmasse (Mw) von 200 bis 20000 g/mol
und
(B) einer Epoxidverbindung mit mindestens zwei Epoxidgruppen pro Molekül und einem Epoxidäquivalentgewicht von 100 bis 2000 g/mol,
wobei das Äquivalentverhältnis der OH-Gruppen zu den EP-Gruppen 1:3,6 bis 1:10 beträgt und das Epoxidäquivalentgewicht des Additionsprodukts zwischen 150 g/mol und 8000 g/mol liegt, als Emulgatoren für flüssige Epoxidharze.

2. Verwendung nach Anspruch 1, dadurch gekennzeichnet, daß die Komponente (B) ausgewählt ist aus Diglycidylethern von mehrwertigen Phenolen.

3. Verwendung nach Anspruch 2, dadurch gekennzeichnet, daß die Komponente (B) ausgewählt ist aus den Diglycidylethern von Bisphenol A und Bisphenol F.

4. Verwendung nach Anspruch 1, dadurch gekennzeichnet, daß als Komponente (A) ein Polyalkylenglykol eingesetzt wird.

5. Verwendung nach Anspruch 4, dadurch gekennzeichnet, daß als Komponente (A) ein Polyethylenglykol eingesetzt wird.

6. Verwendung nach Anspruch 1, dadurch gekennzeichnet, daß die Polyol-Epoxid-Additionsprodukte durch Umsetzen der Polyole (A) mit den Epoxidverbindungen (B) in Gegenwart von Katalysatoren bei 50 bis 200 °C erhältlich sind.

7. Wasserverdünnbares Epoxid-Flüssigharz-System, enthaltend ein Epoxid-Flüssigharz und Wasser, das erhältlich ist unter Verwendung gemäß Anspruch 1 von Polyol-Epoxid-Additionsprodukten erhältlich durch Umsetzung
(A) eines aliphatischen Polyols mit einer gewichtsmittleren Molmasse (Mw) von 200 bis 20000 g/mol
und
(B) einer Epoxidverbindung mit mindestens zwei Epoxidgruppen pro Molekül und einem Epoxidäquivalentgewicht von 100 bis 2000 g/mol,
wobei das Äquivalentverhältnis der OH-Gruppen zu den EP-Gruppen 1:3,6 bis 1:10 beträgt und das Epoxidäquivalentgewicht des Additionsprodukts zwischen 150 g/mol und 8000 g/mol liegt.

## Claims

1. The use of polyol/epoxy adducts obtainable by reaction of
(A) an aliphatic polyol having an average molecular weight (Mw) of 200 to 20,000 g/mole
and
(B) an epoxy compound having at least two epoxy groups per molecule and an epoxy equivalent weight of 100 to 2000 g/mole,
the equivalent ratio of the OH groups to the EP groups being 1:3.6 to 1:10 and the epoxy equivalent weight of the adduct being between 150 g/mole and 8000 g/mole, as emulsifiers for epoxy resins.

2. The use as claimed in claim 1, wherein the component (B) has been selected from diglycidyl ethers of polyhydric phenols.

3. The use as claimed in claim 2, wherein the component (B) has been selected from diglycidyl ethers of bisphenol A and bisphenol F.

4. The use as claimed in claim 1, wherein the component (A) used is a polyalkylene glycol.

5. The use as claimed in claim 4, wherein the component (A) used is a polyethylene glycol.

6. The use as claimed in claim 1, wherein the polyol/epoxy adducts are obtainable by reaction of the polyols (A) with the epoxy compounds (B) in the presence of catalysts at 50 to 200°C.

7. A water-dilutable epoxy/liquid resin system, comprising an epoxy liquid resin and water and obtainable by the use as claimed in claim 1 of polyol/epoxy adducts obtainable by reaction of
(A) an aliphatic polyol having an average molecular weight (Mw) of 200 to 20,000 g/mole and
(B) an epoxy compound having at least two epoxy groups per molecule and an epoxy equivalent weight of 100 to 2000 g/mole,
the equivalent ratio of the OH groups to the EP groups being 1:3.6 to 1:10 and the epoxy equivalent weight of the adduct being between 150 g/mole and 8000 g/mole.

## Revendications

1. Utilisation de produits d'addition de polyol avec un époxyde que l'on peut obtenir en mettant à réagir
(A) un polyol aliphatique ayant une masse molaire moyenne en masse (Mw) de 200 à 20000 g/mol
et
(B) un composé époxyde ayant au moins deux groupes époxyde par molécule et une masse équivalente en époxyde de 100 à 2000 g/mol,
dans laquelle le rapport équivalent des groupes OH par rapport aux groupes EP se monte de 1 : 3,6 à 1 : 10 et la masse équivalente en époxyde du produit d'addition est située entre 150 g/mol et 8000 g/mol, comme agents émulsionnants pour des résines époxyde liquides.

2. Utilisation selon la revendication 1, caractérisée en ce que, le composant (B) est choisi parmi les éthers diglycidyliques de phénols polyhydroxylés.

3. Utilisation selon la revendication 2, caractérisée en ce que, le composant (B) est choisi parmi les éthers diglycidyliques de bisphénol A et de bisphénol F.

4. Utilisation selon la revendication 1, caractérisée en ce qu'on utilise comme composant (A) un polyalkylèneglycol.

5. Utilisation selon la revendication 4, caractérisée en ce qu'on utilise comme composant (A) un polyéthylèneglycol.

6. Utilisation selon la revendication 1, caractérisée en ce que les produits d'addition de polyol avec un époxyde peuvent être obtenus en mettant à réagir les polyols (A) avec les composés époxydes (B) en présence de catalyseurs de 50 à 200°C.

7. Système de résine époxyde liquide diluable à l'eau, contenant une résine époxyde liquide et de l'eau, que l'on peut obtenir en utilisant des produits d'additions de polyol avec un époxyde en mettant à réagir
(A) un polyol aliphatique ayant une masse molaire moyenne en masse (Mw) de 200 à 20000 g/mol
et
(B) un composé époxyde ayant au moins deux groupes époxyde par molécule et une masse équivalente en époxyde de 100 à 2000 g/mol,
dans lequel le rapport équivalent des groupes OH par rapport aux groupes EP se monte de 1 : 3,6 à 1 : 10 et la masse équivalente en époxyde du produit d'addition est située entre 150 g/mol et 8000 g/mol.
